## Europäisches Patentamt
## European Patent Office
## Office européen des brevets

(11) Publication number: **0 201 112**
**B1**

# EUROPEAN PATENT SPECIFICATION

(45) Date of publication of patent specification: **16.01.91**

(51) Int. Cl.⁵: **H 02 K 13/04,** H 01 R 39/32, B 23 K 11/30

(21) Application number: **86200366.2**

(22) Date of filing: **10.03.86**

(54) **Apparatus and method for automatically replacing the electrode in a welding machine for electric motor rotors.**

(30) Priority: **06.05.85 IT 2058785**

(43) Date of publication of application:
**12.11.86 Bulletin 86/46**

(45) Publication of the grant of the patent:
**16.01.91 Bulletin 91/03**

(84) Designated Contracting States:
**CH DE FR GB LI SE**

(56) References cited:
**CH-A- 482 321**
**DE-C- 715 724**
**FR-A-1 550 106**

(73) Proprietor: **AXIS S.p.A.**
**I-55028 Tavarnelle val di pesa (Florence) (IT)**

(72) Inventor: **Luciani, Sabatino**
**Via di Querceto, 169**
**I-50019 Sesto Fiorentino (Firenze) (IT)**

(74) Representative: **Lotti, Giorgio**
**c/o Ing. Barzanò & Zanardo Milano S.p.A. Via Cernaia 20**
**I-10122 Torino (IT)**

Courier Press, Leamington Spa, England.

## Description

The invention relates to an apparatus and method for automatically replacing the electrode in a welding machine for electric motor rotors. DE—A—715724 discloses a welding machine comprising a revolving turret having a plurality of electrodes. Each electrode provides a leverage connected, at a first end, to the electrode and, at a second end, to a spring. On the hingeing point of the leverage, a bar is translated backwards and forwards by a crank mechanism against a further spring in order to advance or retract the electrode. After a number of weldings the turret is rotated to cause another one of the electrodes to become the new operatively positioned electrode.

A system constituted by leverage and springs, normally, is not extremely reliable for precise and repeatable positionings. Moreover, each electrode is provided with its own lever system and this makes the machine still more complex and less reliable. In traditional welding machines used for welding the ends of armature windings to the respective commutators, the welding operation takes place as follows.

The armature is positioned under a welding head, and a device which rotates the armature stepwise through angles equal to the angle between the adjacent commutator hooks to which the armature wires are to be welded then causes the armature to undergo a first zeroing rotation which moves the first commutator hook into a position corresponding with the electrode. In order to facilitate the connection between the wire and the commutator hook, the welding head undergoes a short vertical movement to force the electrode against the hook, thus mechanically deforming it (crimping). This operation makes the electric circuit and a high-intensity current begins to pass through the tungsten electrode and the earth electrode, thus heating the commutator bar and consequently the wire, to remove its insulating covering and create contact between the wire and commutator hook. The same "hot-stacking" operation is carried out on each successive hook after rotating the armature through an angle equal to the angle between one hook and the next. During the welding operation, which takes place at the rate of one every 0.8 seconds, the tungsten electrode, by virtue of its mechanical action and the heating which it undergoes, loses sharpness at its tip and thus loses its welding efficiency, and consequently has to be replaced by a sharpened one. This replacement, which may have to be done as often as every two hours of operation, is currently carried out generally by replacing the electrode holding block which is fixed by screws to a support, and this is always done manually. It is therefore apparent that these operations involved in replacing the electrode are undesirable and cause too frequent interruptions in the welding machine operating cycle. These operations also require the presence of an operator who intervenes manually on the machine every two hours in order to replace the electrode by an operation which requires a time which is too long with respect to the machine working rate. The object of the invention is to provide a device for the programmed automatic replacement of worn electrodes, which are repeatedly replaced by sharpened electrodes withdrawn automatically from a magazine in the machine. This concept avoids the need for continuous manual intervention, by limiting it to a single operation when all the magazine electrodes have been used. In addition, the idle times during the replacement of each electrode are considerably reduced in that this is done automatically by the machine without any manual intervention, which would inevitably lead to considerable lengthening of such idle time.

These and further objects which will be more apparent hereinafter are attained according to the invention by a machine and a method for welding the ends of the armature winding of an electric motor rotor to the commutator bars, as claimed respectively in claims 1 and 6.

The apparatus and the method according to the invention are described hereinafter with reference to the accompanying drawings, in which:

Figure 1 is a partly sectional side view of a welding machine provided with the automatic electrode replacement device according to the invention;

Figure 2 is a front view of the automatic replacement device of Figure 1.

In a fusion support 10, which supports all the welding head devices, there is slidably mounted a vertical shaft 11 to which the tungsten electrode 12 for welding the wires 13 onto the hooks 14 of the commutator 15 of the armature 9 is connected in the manner described hereinafter. The copper earth electrode 16 is carried by a support 17 to which the current-carrying braid and the cooling water piping are connected. As the support 17 is of a type known to the expert of the art, it is not described in terms of its constructional details. According to the invention, a revolving turret 18 in which a plurality of electrodes 12 are inserted is connected to the shaft. These electrodes are cylindrical in the part which enters the turret, and comprise two flat facets on the tip, where contact is made with the commutator hook. When the electrode is inserted into the turret, it rests on a grub screw 19, which is axially adjusted such that the electrode tip is always at the same distance from the centre of rotation of the turret, and is still the case when the electrode has been sharpened several times. A further grub screw 28 serves to retain the electrode axially and to angularly position its two facets. All these operations involving the positioning of the electrodes in the turret are carried out away from the machine on a suitable fixture. The revolving turret 18 rotates about its centre 20 on a shaft 27 securely screwed to the support 17, and has a toothed periphery 21 which engages with a rack 22 rigid with a piston 23 comprising adjustable stops 32 to enable it to undergo a stroke which is exactly equal to the angle between one electrode and the next.

Strong contact is attained between the turret 18 and support 17 by virtue of the pressure exerted by an air chamber 25 provided inside the turret. The pressure is obtained in the following manner: Air from the compressed air system enters the support 17 through a bore 29, to reach the chamber 25 through a longitudinal and transverse bore 33 in the shaft 27. The turret is thrust against the support 17 by the reaction against a disc 31, provided with suitable seals 35, which rests against a ring nut 30 which is screwed onto the shaft 27. The ring nut 30 can be unscrewed manually when the entire turret is to be replaced. The shaft 11 is connected to the support 17 by four screws 34.

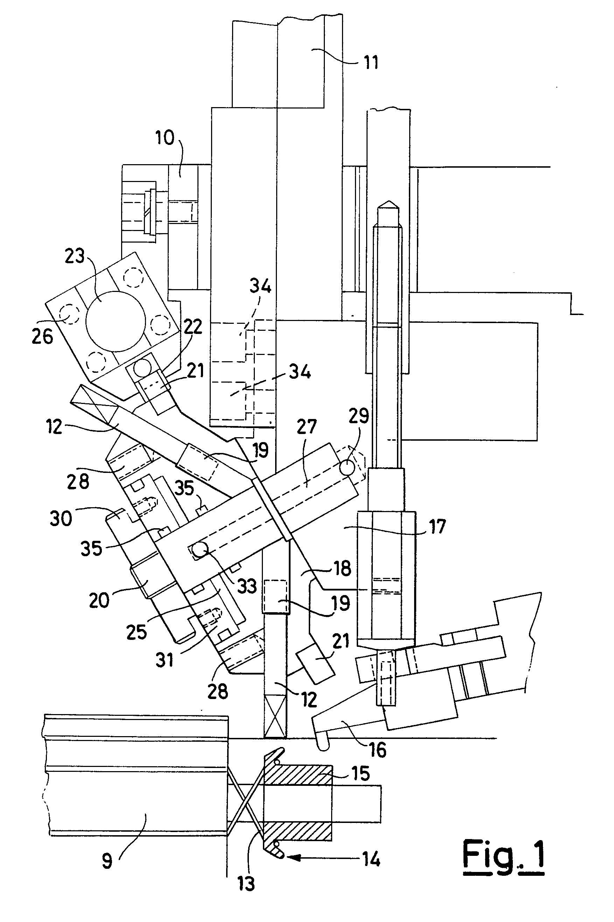

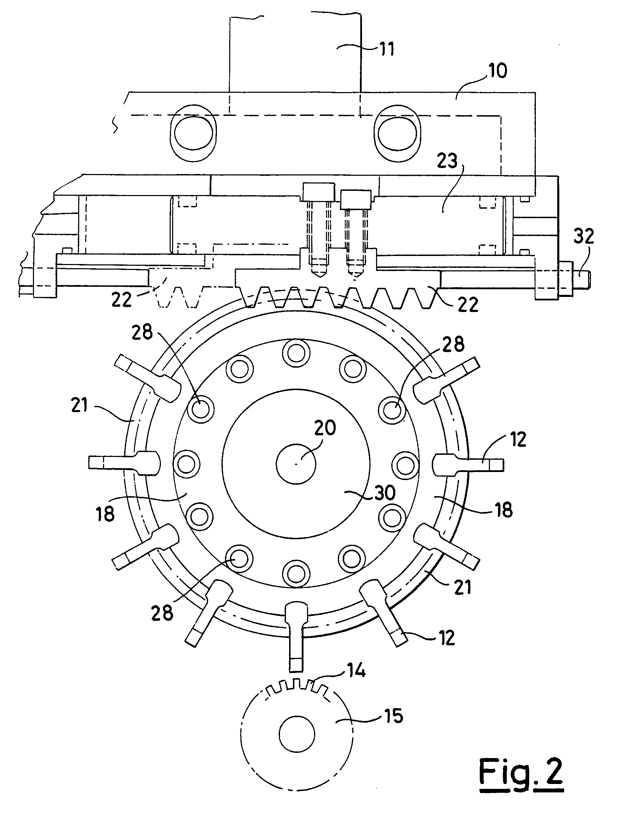

When in the position shown in Figures 1 and 2, the electrode 12 facing the armature 9 is ready to make the joint. The shaft 11 is now driven downwards to cause the electrodes 12 and 16 to fuse the wire 13 onto the hook 14. During this stage, the support 26 for the piston 23 and rack 22 remains fixed as it is rigid with the support 10. In contrast, the turret 18, which is rigid with the mobile support 17 and consequently with the shaft 11, translates with this latter. The toothed wheel 21 disengages from the rack 22, and the electrode 12 facing the armature 9 makes the weld.

The number of joints which an electrode can make before becoming worn will have already been set on the machine electronic control system, and thus the electrode will repeatedly fuse at the rate determined by the control system, all the wires of the armature rotating stepwise below it through angles equal to the angular distances between its hooks 14, followed by all those of all the other armatures 9 which alternate automatically below the electrode, until the number of joints for which that electrode has been programmed is reached. At this point, the machine stops, discharges the last completed armature without loading others into it, and begins the electrode replacement operation in accordance with the following stages.

At the commencement of the replacement operation for the electrode 12, the mobile shaft 11 is in its raised position, and the rack 22, which engages with the toothed wheel 21 of the revolving turret 18, is in the position shown in Figure 2, i.e. to the right when viewing the machine face. The pressure is removed from the air chamber 25 to release the turret 18 from its engagement against the support 17, and the piston 23 is moved to the left (shown by dashed lines in Figure 2) to cause the turret to undergo one indexing movement, i.e. a rotation equal to the angular distance between two adjacent electrodes 12. A new electrode 12 will therefore lie in the position previously occupied by the worn electrode. Pressure is again applied to the air chamber 25, to restore the rigid connection between the turret 18 and support 17, and the mobile shaft 11 is then driven downwards to drag the turret 18, so releasing its toothed wheel 21 from its engagement with the rack 22. The piston 23 is reset, i.e. it again moves the rack 22 to the right (shown by full lines in Figure 2), to again attain the waiting position for the next electrode replacement. The shaft 11 finally returns to its raised position for commencing the new joint which is made when a new armature 9 has been fed into the position of Figure 1.

These electrode replacement operations are repeated exactly as heretofore described until the electrodes in the turret have all become worn, after which the machine is stopped so that the operator can manually replace the turret with another containing new electrodes pre-positioned in a manner similar to the preceding.

**Claims**

1. Apparatus for welding the ends of the armature winding (13) of an electric motor rotor to the commutator bars (14) with their associated winding ends being successively positioned at a welding station; said apparatus comprising: a turret (18); a plurality of electrodes (12) mounted on said turret (18) in an annular array having a center (20); means (16) for passing an electrical current through an electrical circuit formed with a commutator bar (14) and the operatively positioned electrode (12), to heat the operatively positioned electrode (12) of the turret (18) and thereby cause heat transfer from said operatively positioned electrode (12) to said commutator bar (14), the heat transfer cooperating to weld said commutator bar (14) to the associated winding end; characterized in that the apparatus further comprises: means (11) for alternately moving said turret (18) toward and away from said welding station to cause said operatively positioned electrode (12) to apply a mechanical pressure to a commutator bar (14) at said welding station and to form said electrical circuit with said commutator bar (14), each time said operatively positioned electrode (12) is moved toward said welding station; means (21, 22) for rotating said turret (18) about said center (20) each time the above means (11) for alternately moving the turret (18) has performed a predetermined number of operating cycles to cause another one of said electrodes (12) to become said operatively positioned electrode.

2. The apparatus defined in claim 1, wherein said means (11) for alternately moving the turret (18) includes a longitudinally reciprocable shaft (11) and means (17, 25) for releasably securing said turret (18) to said shaft (11).

3. The apparatus defined in claim 2 wherein said means (17, 25) for releasably securing said turret (18) to said shaft (11) comprises: a chamber (25) disposed in said turret (18) and having a movable disc (31) operatively disposed between said chamber (25) and said shaft (11); and means (29, 33) for selectively supplying compressed air to said chamber (25) to force said movable disc (31) against said shaft (11) and thereby releasably secure said turret (18) to said shaft (11).

4. The apparatus defined in claim 3 wherein said electrodes (12) have equal angular spacing from one another in said angular array, and wherein said means (21, 22) for rotating said turret (18) about said center (20) comprises: a toothed periphery (21) disposed on said turret (18) and concentric with said center (20) and rack means (22) tangently engaing said toothed periphery (21); means (23) causing said rack means (22) to translate by a predetermined amount tangent to said toothed periphery (21) each time said means (11) for alternately moving said turret (18) has performed said predetermined number of operating cycles, said predetermined amount being the amount required to rotate said toothed periphery (21) through an angle eqaul to the angular spacing between adjacent electrodes (12).

5. The apparatus defined in claim 4 wherein said means (23) for causing said rack means (22) to translate causes said rack (22) to translate while said means (17, 25) for releasably securing said turret (18) to said shaft (11) has released the turret from the shaft.

6. A method of welding the ends of the armature windings (13) of an electric motor rotor to the commutator bars (14), said commutator bars (14) with their associated winding ends being successively positioned at a welding station, said method comprising the steps of: providing a turret (18), having a center (20) and a plurality of electrodes (12) mounted on said turret (18) in an annular array concentric with said center (20); rotating said turret (18) about said center (20) so that one of said electrodes (12) is operatively positioned adjacent said welding station; passing an electrical current through an electrical circuit formed with a commutator bar (14) and the operatively positioned electrode (12), to heat said operatively positioned electrode (12) of the turret (18) and thereby cause heat transfer from said operatively positioned electrode (12) to said commutator bar (14), the heat transfer cooperating to weld said commutator bar (14) to the associated winding end; characterized in that the method further comprises the steps of: alternately moving said turret (18) toward and away from said welding station to cause said operatively positioned electrode (12) to apply a mechanical pressure to a commutator bar (14) at said welding station and to form said electrical circuit with said commutator bar (14) each time said operatively positioned electrode (12) is moved toward said welding station; rotating said turret (18) about said center (20) each time the apparatus has performed a predetermined number of operating cycles to cause another one of said electrodes (12) to become said operatively positioned electrode.

**Patentansprüche**

1. Vorrichtung zum Anschweissen der Enden der Ankerwicklung (13) eines Rotors eines elektrischen Motors an die Kommutatorlammellen (14), wobei die ihnen zugeordneten Enden der Ankerwicklung nacheinander in die richtige Stellung zu einer Schweissstation gebracht werden, welche aufweist:

einen Revolverkopf (18);

eine Mehrzahl von Elektroden (12), welche auf dem Revolverkopf (18) in einer ringförmigen Anordnung, die ein Zentrum (20) aufweist, montiert sind;

Mittel (16) zum Durchschicken eines elektrischen Stroms durch einen elektrischen Stromkreis, welcher durch eine Kommutatorlamelle (14) und die in Arbeitsstellung gebrachte Elektrode (12) gebildet wird, um die in Arbeitsstellung gebrachte Elektrode (12) des Revolverkopfs (18) zu erhitzen und dabei eine Wärmeübertragung von der in Arbeitsstellung gebrachten Elektrode (12) auf die Kommutatorlamelle (14) zu bewerkstelligen, wobei diese Wärmeübertragung dazu beiträgt, dass die Kommutatorlamelle (14) mit dem ihr zugeordneten Ende der Ankerwicklung verschweisst wird; dadurch gekennzeichnet, dass die Vorrichtung weiter aufweist:

Mittel (11) zum abwechselnden Bewegen des Revolverkopfs (18) zur Schweissstation hin und von dieser weg, um jedesmal, wenn die in Arbeitsstellung gebrachte Elektrode (12) gegen die Schweissstation zubewegt wird, die in Arbeitsstellung gebrachte Elektrode (12) zu veranlassen, an der Schweissstation einen mechanischen Druck auf die Kommutatorlamelle (14) auszuüben und mit der Kommutatorlamelle (14) einen elektrischen Stromkreis zu bilden; und

Mittel (21, 22) zum Drehen des Revolverkopfs (18) um das Zentrum (20), jedesmal dann, wenn die Mittel (11) zum abwechselnden Bewegen des Revolverkopfs (18) eine vorbestimmte Anzahl Arbeitszyklen ausgeführt haben, um zu bewirken, dass eine andere der Elektroden (12) die in Arbeitsstellung gebrachte Elektrode wird.

2. Vorrichtung nach Anspruch 1, worin die Mittel (11) zum abwechselnden Bewegen des Revolverkopfs (18) einen in Längsrichtung hin- und herbewegbaren Stempel (11) und Mittel (17, 25) zur lösbaren Befestigung des Revolverkopfs (18) am Stempel (11) aufweist.

3. Vorrichtung nach Anspruch 2, worin die Mittel (17, 25) zur lösbaren Befestigung des Revolverkopfs (18) am Stempel (11) aufweisen:

eine Kammer (25), welche im Revolverkopf (18) angeordnet ist und eine bewegliche Scheibe (31) aufweist, die in Arbeitstellung zwischen der Kammer (25) und dem Stempel (11) angeordnet ist; und

Mittel (29, 33) zur selektiven Zufuhr von Druckluft zur Kammer (25), um die bewegliche Scheibe (31) gegen den Stempel (11) zu drücken und dabei den Revolverkopf (18) lösbar am Stempel (11) zu befestigen.

4. Vorrichtung nach Anspruch 3, worin die Elektroden (12) in der ringförmigen Anordnung voneinander gleichen Winkelabstand aufweisen, und worin die Mittel (21, 22) zum Drehen des Revolverkopfs (18) um das Zentrum (20) aufweisen:

einen gezähnten Umfang (21), welcher am Revolverkopf (18) und konzentrisch zum Zentrum (20) angeordnet ist, und Zahnstangen-Mittel (22), welche in den gezähnten Umfang (21) tangential eingreifen;

Mittel (23), welche berwerkstelligen, dass die Zahnstangen-Mittel (22) sich tangential zum gezähnten Umfang (21) um eine vorbestimmte Strecke verschieben, jedesmal dann, wenn die Mittel (11) zum abwechselnden Bewegen des Revolverkopfs (18) die vorbestimmte Anzahl Arbeitszyklen ausgeführt haben, wobei die vorbestimmte Strecke der Strecke entspricht, welche notwendig ist, um den gezähnten Umfang (21) um einen Winkel zu drehen, der dem Winkelabstand zwischen benachbarten Elektroden (12) entspricht.

5. Vorrichtung nach Anspruch 4, worin die Mittel (23), welche berwerkstelligen, dass die Zahnstangen-Mittel (22) sich verschieben, die Verschiebung des gezähnten Umfangs (21) bewerkstelligen, während die Mittel (17, 25) zur lösbaren Befestigung des Revolverkopfs (18) am Stempel (11) den Revolverkopf vom Stempel gelöst haben.

6. Verfahren zum Anschweissen der Enden der Ankerwicklung (13) eines Rotors eines elektrischen Motors an die Kommutatorlamellen (14), wobei die ihnen zugeordneten Enden der Ankerwicklung nacheinander in die richtige Stellung zu einer Schweissstation gebracht werden, welches folgende Verfahrensschritte aufweist:

Bestücken mit einem Revolverkopf (18), welcher ein Zentrum (20) und eine Mehrzahl von Elektroden (12) aufweist, welche auf dem Revolverkopf (18) in ringförmiger Anordnung konzentrisch zum Zentrum (20) montiert sind;

Drehen des Revolverkopfs (18) um das Zentrum (20), so dass eine der Elektroden (12) in Arbeitsstellung nahe der Schweissstation gebracht wird;

Durchschicken eines elektrischen Stroms durch einen Stromkreis, welcher durch eine Kommutatorlamelle (14) und die in Arbeitsstellung gebrachte Elektrode (12) gebildet wird.

um die in Arbeitsstellung gebrachte Elektrode (12) des Revolverkopfs (18) zu erhitzen und dabei eine Wärmeübertragung von der in Arbeitsstellung gebrachten Elektrode (12) auf die Kommutatorlamelle (14) zu bewerkstelligen, wobei diese Wärmeübertragung dazu beiträgt, dass die Kommutatorlamelle (14) mit dem ihr zugeordneten Ende der Ankerwicklung verschweisst wird; dadurch gekennzeichnet, dass das Verfahren weiter die folgenden Arbeitsschritte aufweist:

Abwechselndes Bewegen des Revolverkopfs (18) zur Schweissstation hin und von dieser weg, um jedesmal, wenn die in Arbeitsstellung gebrachte Elektrode (12) gegen die Schweissstation zubewegt wird, die in Arbeitsstellung gebrachte Elektrode (12) zur veranlassen, an der Schweissstation einen mechanischen Druck auf die Kommutatorlamelle (14) auszuüben und mit der Kommutatorlamelle (14) einen elektrischen Stromkreis zu bilden; und

Drehen des Revolverkopfs (18) um das Zentrum (20), jedesmal dann, wenn die Vorrichtung eine vorbestimmte Anzahl Arbeitszyklen ausgeführt hat, um zu bewirken, dass eine andere der Elektroden (12) die in Arbeitsstellung gebrachte Elektrode wird.

## Revendications

1. Appareil pour le soudage des extrémités des enroulements d'induit (13) d'un rotor de moteur électrique aux lames de collecteur (14) avec les extrémités correspondantes des enroulements disposées successivement à un poste de soudure, cet appareil comprenant: une tourelle (18), une pluralité d'électrodes (12) montées sur cette tourelle (18) en une rangée annulaire ayant un centre (20), un moyen (16) pour faire passer un courant électrique à travers un circuit électrique formé avec une lame du collecteur (14) et l'électrode (12) disposée fonctionnellement pour chauffer cette électrode (12) disposée fonctionnellement de la tourelle (18) et provoquer ainsi un transfert de chaleur de l'électrode (12) disposée fonctionnellement à la lame du commutateur (14), le transfert de chaleur coopérant pour souder la lame de commutateur (14) à l'extrémité correspondante de l'enroulement, caractérisé en ce que cet appareil comprend en plus: un moyen (11) pour déplacer alternativement la tourelle (18) dans le sens de rapprochement et d'éloignement du poste de soudure pour obliger l'électrode (12) disposée fonctionnellement à appliquer une pression mécanique sur une lame (14) de collecteur au poste de soudure et pour former le circuit électrique avec ladite lame (14) de collecteur chaque fois que cette électrode (12) disposée fonctionnellement est déplacée en direction du poste de soudure, un moyen (21, 22) pour faire tourner la tourelle (18) autour du centre (20) chaque fois que le moyen ci-dessus (11) de déplacement alternatif de la tourelle (18) a exécuté un nombre prédéterminé de cycles de fonctionnement pour obliger une autre des électrodes (12) à devenir l'éléctrode disposée fonctionnellement.

2. Appareil défini dans la revendication 1, dans lequel le moyen (11) pour déplacer alternativement la tourelle (18) comprend un arbre (11) déplaçable alternativement en sens alternés et un moyen (17, 25) pour fixer de manière détachable ladite tourelle (18) audit arbre (11).

3. Appareil défini dans la revendication 2, dans lequel le moyen (17, 25) pour fixer de manière détachable la tourelle (18) à l'arbre (11) comprend: une chambre (25) disposée dans la tourelle (18) et ayant un disque mobile (31) disposé fonctionnellement entre cette chambre (25) et l'arbre (11), et un moyen (29, 33) pour fournir sélectivement de l'air comprimé à la chambre (25) afin de forcer le disque mobile (31) contre l'arbre (11) et fixer ainsi de manière détachable la tourelle (18) à l'arbre (11).

4. Appareil défini dans la revendication 3, dans lequel les électrodes (12) ont un espacement angulaire égal les unes des autres dans ladite rangée angulaire et dans lequel le moyen (21, 22) pour faire tourner la tourelle (18) autour du centre (20) comprend: une périphérie dentée (21) disposée sur la tourelle (18) et concentrique au centre (20) et une crémaillère (22) s'engageant tangentiellement avec ladite périphérie dentée (21), un moyen (23) obligeant la crémaillère (22) à se déplacer par translation d'une quantité prédéterminée tangentiellement à la périphérie dentée (21) chaque fois que le moyen (11) pour déplacer alternativement la tourelle (18) a exécuté ledit nombre prédéterminé de cycles de fonctionnement, cette quantité prédéterminée étant la quantité requise pour faire tourner la périphérie dentée (21) d'un angle égal à l'espacement angulaire séparant les électrodes voisines (12).

5. Appareil défini dans la revendication 4, dans lequel le moyen (23) pour obliger la crémaillère à se déplacer par translation oblige cette crémaillère (22) à se déplacer par translation pendant que le moyen (17, 25) pour fixer de manière détachable la tourelle (18) à l'arbre (11) a libéré la tourelle de cet arbre.

6. Procédé de soudure des extrémités des enroulements d'induit (13) d'un rotor de motor électrique aux lames de collecteur (14), ces lames de collecteur (14) avec leurs extrémités correspondantes des enroulements étant disposées successivement à un poste de soudure, ce procédé comprenant les opérations de; fournir une tourelle (18) ayant un centre (20) et une pluralité d'électrodes (12) montées sur cette tourelle (18) en une rangée annulaire concentrique à ce centre (20), faire tourner la tourelle (18) autour du centre (20) de façon que l'une des électrodes (12) soit disposée fonctionnellement au voisinage du poste de soudure, faire passer un courant électrique à travers un circuit électrique formé par une lame de commutateur (14) et l'électrode (12) disposée fonctionnellement pour chauffer cette électrode disposée fonctionnellement de la tourelle (18) et provoquer ainsi un transfert de chaleur de l'électrode (12) disposée fonctionnellement à la lame de collecteur (14), le transfert de chaleur coopérant pour souder la lame de collecteur (14) à l'extrémité correspondante de l'enroulement, caractérisé en ce que le procédé comprend en plus les opérations de: déplacer de manière alternative la tourelle (18) dans des sens de rapprochement et d'éloignement du poste de soudure pour obliger l'électrode (12) disposée fonctionnellement à appliquer une pression mécanique sur une lame de collecteur (14) au poste de soudure et pour former le circuit électrique avec la lame de collecteur (14) chaque fois que l'électrode (12) positionnée fonctionnellement est déplacée en direction du poste de soudure, faire tourner la tourelle (18) autour du centre (20) chaque fois que l'appareil a exécuté un nombre prédéterminé de cycles de fonctionnement pour obliger une autre des électrodes (12) à devenir l'électrode disposée fonctionnellement.

**Fig. 1**

Fig.2